(19) Europäisches Patentamt
European Patent Office
Office européen des brevets

(11) **EP 4 290 069 B1**

(12) **EUROPEAN PATENT SPECIFICATION**

(45) Date of publication and mention
of the grant of the patent:
**30.10.2024 Bulletin 2024/44**

(21) Application number: **22215235.7**

(22) Date of filing: **21.12.2022**

(51) International Patent Classification (IPC):
**F03D 9/11** *(2016.01)*

(52) Cooperative Patent Classification (CPC):
**F03D 1/00; F03D 1/02; F03D 1/048; F03D 3/02;
F03D 9/11; F03D 9/25;** Y02E 10/72

(54) **WIND TURBINE GENERATOR**

WINDTURBINENGENERATOR

GÉNÉRATEUR D'ÉOLIENNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.06.2022 CN 202210637284**

(43) Date of publication of application:
**13.12.2023 Bulletin 2023/50**

(73) Proprietor: **Zhou, Dajun
Shenzhen City, Guangdong 518049 (CN)**

(72) Inventor: **Zhou, Dajun
Shenzhen City, Guangdong 518049 (CN)**

(74) Representative: **Sun, Yiming
HUASUN Patent- und Rechtsanwälte
Friedrichstraße 33
80801 München (DE)**

(56) References cited:
**EP-A1- 1 650 432     WO-A1-2021/118475
JP-B2- 4 827 380**

# Description

## FIELD

The present invention relates to the field of electric generator technology, in particular, a wind turbine generator.

## BACKGROUND

Currently, large-scale (3-blade) wind power generation systems, blade design, variable speed systems, wind turbines, electrical control technology and etc. are mature.

However, existing wind turbines and related wind power generation systems have the following problems.

Firstly, large wind turbines can only be mounted in the ocean and in uninhabited areas; small wind power generation systems are basically through blade direct drive or variable speed variable direction gear transmission systems to drive horizontal axis wind turbines (or mechanical energy generators), and the mounting area of wind blades is also limited.

Secondly, large-scale wind power generation systems have high output power but related systems are large, and small wind power generation systems are small but have low output power.

Thirdly, one of the major disadvantages of wind power generation is poor continuity, which cannot better deal with interstitial wind.

Referring to FIG. 6, Chinese Utility Model Application Number CN202120800876.X, filed by the applicant on April 19, 2021, discloses a wind power generation device, including main body A1 of the wind power generation device, and no less than two air collector hoods A13 are mounted on the four sides of the main body A1 of the wind power generation device from top to bottom, and the inner front end of the air collector hood is provided with an external air receiving port, the inner rear end A3 of the air collector hood is provided with an internal air receiving port, the rear end of the air collector hood A13 is connected to an air transmission pipe A7, and the bottom end of the outer surface of the air transmission pipe is thread connected with the tail pipe of the air transmission pipe, and the lower end of the outer surface of the air transmission pipe located above the tail pipe of the air transmission pipe is provided with a wind collection box A8, a second one-way valve plate is mounted inside the tail pipe of the wind transmission pipe, and air outlets are provided on both sides and the front and rear surfaces of the wind power generation device body, and a first one-way valve plate is mounted inside the air outlet. This design accelerates the wind energy through the air collector hood, and then converts the wind energy into a vertical wind direction through the air transmission pipe, making the wind energy conversion more efficient. Document WO2021/118475 A1 discloses another prior art example of a wind turbine.

The present invention proposes a wind turbine generator that can be used in conjunction with the above wind power generation device, through the wind power generation device to convert wind energy into vertical wind direction, and then through the wind turbine generator of the present application for power generation.

## SUMMARY

The object of the present invention is to provide a wind turbine generator to solve the problems that large wind turbine generator can only be mounted in the ocean, in uninhabited wild areas; small wind power generation systems are basically through wind blade direct drive or variable speed variable direction gear transmission systems to drive horizontal axis wind turbine generators (or mechanical energy generators), and the mounting area of wind blades also has certain restrictions.

To achieve the above object, the present invention provides a wind turbine generator, according to claim 1, comprising a bottom plate, a wind housing, an outer cylinder and an inner cylinder, wherein: the bottom plate is provided with a wind housing, the wind housing is sequentially provided with an outer cylinder and an inner cylinder, the inner cylinder is rotatably mounted on the bottom plate, the outer cylinder is rotatably mounted on the wind housing, the outer cylinder is provided with an outer rotation wind turbine, and the inner cylinder is provided with an inner rotation wind turbine, an interlayered outer shell and an interlayered inner shell are sequentially placed between the outer cylinder and the inner cylinder, the interlayered shell and the interlayered inner shell are provided on the bottom plate, and an interlayered coil is placed between the interlayered outer shell and the interlayered inner shell, the inner wall of the outer cylinder is uniformly provided with an outer rotor, and the interlayered outer shell is uniformly provided with an outer stator that matches the outer rotor, the outer wall of the inner cylinder is uniformly provided with an inner rotor, the interlayered inner shell is uniformly provided with an inner stator that matches the inner rotor, and a suction fan and a controller are provided under the bottom plate, and the controller is electrically connected to the suction fan.

Wherein, a first mute bearing is placed on the top of the inner side of the wind housing, and the outer cylinder is rotatably mounted inside the wind housing through the first mute bearing.

Wherein, the axis line of the outer rotation wind turbine is located in the same straight line as the axis line of the inner rotation wind turbine, and the outer rotation wind turbine rotates synchronously with the inner rotation wind turbine.

Wherein, a support plate is placed on the top of the interlayered outer shell and the interlayered inner shell, the support plate is inlaid with a second mute bearing at the axis, and the inner cylinder is rotatable and connected with the support plate through the second mute bearing.

Wherein, the support plate is uniformly provided with a first heat dissipation hole.

Wherein, an air jetting hole is uniformly provided on the side of the outer cylinder near the outer rotation wind turbine.

Wherein, the bottom plate is inlaid with a third mute bearing at the axis, and the inner cylinder is rotatably mounted on the bottom plate through the third mute bearing.

Wherein, an exhaust hole and a hollowed-out slot are provided to penetrate through a surface of the bottom plate.

Wherein, the bottom plate is provided with a wire slot for wiring.

Wherein, the $6 \times n$ outer rotors are provided, the n is a positive integer, and $n \geqq 2$; $6 \times n$ inner rotors are provided, the n is a positive integer, and $n \geqq 2$.

Compared with the prior art, the beneficial effects of the present invention include the following.

1. The present invention adopts double rotors, double stators, same frequency power generation system, optimizes the relationship between magnetic induction strength, distance, and wire length, and directly drives at the same time, without variable speed transmission energy loss, and converts wind energy into electric energy to the greatest extent, ensuring high power output and less noise; the invention is easy to mount, and not limited by mounting areas.

2. The present invention uses twin turbine blades (outer rotation wind turbine 8 and inner rotation wind turbine 9) to obtain wind energy, and the turbine blades obtain wind energy much more than the traditional wind blades. The two superimpose to ensure the source and acquisition of high-energy wind energy, which is the basis for the conversion of high-power electricity.

3. When the wind is sufficient, the supercapacitor bank is fully charged; in case of the intermittent wind, when the external wind suddenly decreases, the self-excited power drops to trigger the discharge of the supercapacitor bank, and the suction fan is accelerated after processing by the suction fan control circuit in a short period of time, because the acceleration reduces the wind outflow density of the rotation wind turbine, increases the wind inflow pressure of the rotation wind turbine (at the same time, there will be wind inflow from the wind collection system due to the principle of convection), which can maintain the two rotation wind turbines to rotate for a period of time (discharge time of the supercapacitor bank), if the intermittent wind is relatively short, it can ensure the continuous output of electric energy, and can adjust the intermittent wind to continuous wind.

## DESCRIPTION OF DRAWINGS

FIG. 1 is a schematic diagram of the main view section structure of the present invention;

FIG. 2 is a schematic diagram of the main view section structure of the wind housing of the present invention;

FIG. 3 is a schematic diagram of the A-A cross-section structure in FIG. 2;

FIG. 4 is a schematic diagram of the B-B cross-section structure in FIG. 2;

FIG. 5 is a schematic diagram of the top-down structure of the bottom plate of the present invention;

FIG. 6 is a schematic diagram of wind power generation device disclosed in Chinese Application No. CN202120800876 X; and

FIG. 7 is a schematic diagram of the wind turbine R1 of the invention replacing the generator set A9 and its blade A10 in the wind turbine in FIG. 6.

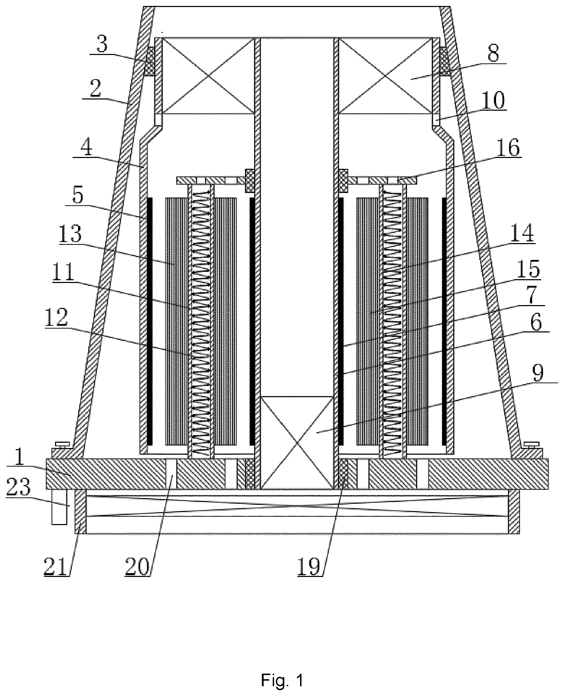

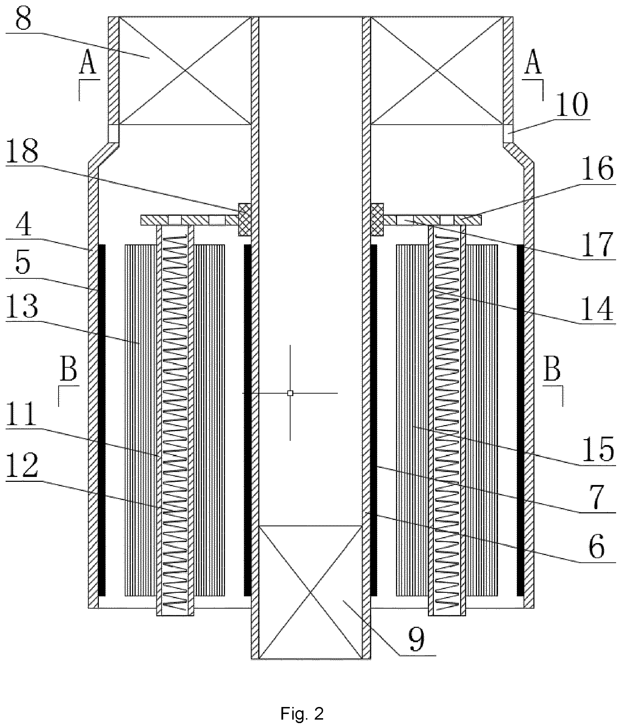

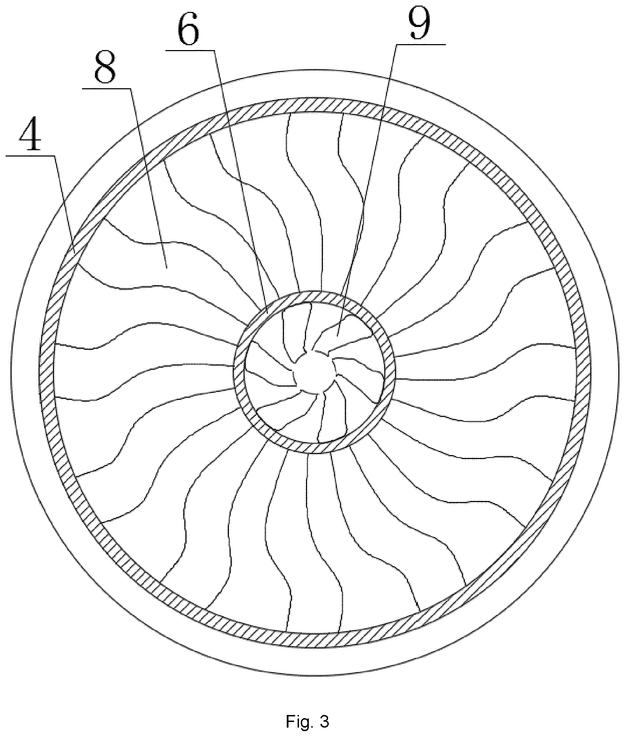

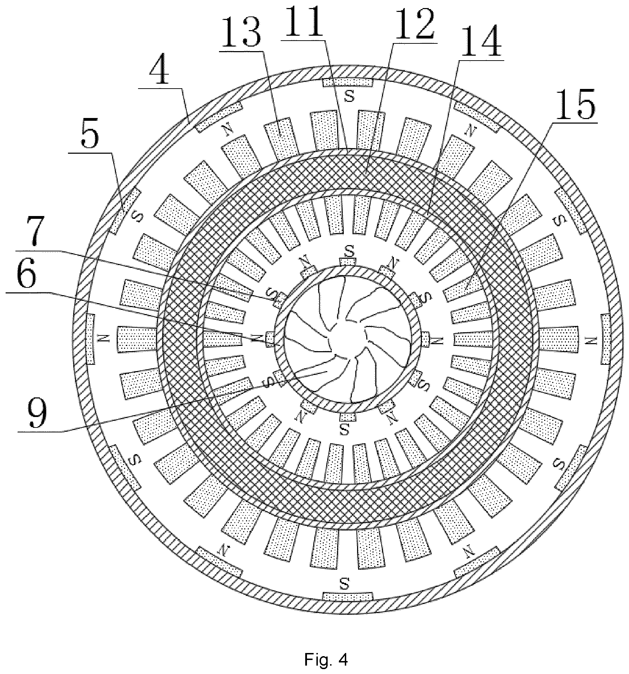

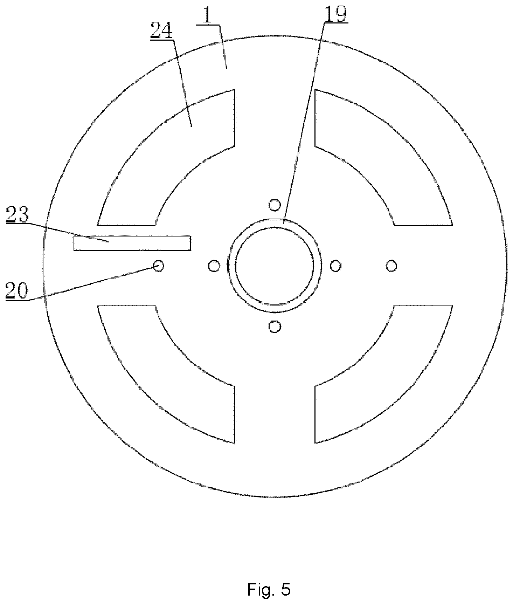

The description of the reference numerals shown in FIGs. 1-5 are provided as follows:
1. bottom plate; 2. wind housing; 3. first mute bearing; 4. outer cylinder; 5. outer rotor; 6. inner cylinder; 7. inner rotor; 8. outer rotation wind turbine; 9. inner rotation wind turbine; 10. air jetting hole; 11. interlayered shell; 12. interlayered coil; 13. outer stator; 14. interlayered inner shell; 15. inner stator; 16. support plate; 17. first heat dissipation hole; 18. second mute bearing; 19. third mute bearing; 20. exhaust hole; 21. suction fan; 22. controller; 23. wire slot; 24. hollowed-out slot.

## DETAILED DESCRIPTION OF EMBODIMENTS

The technical solution(s) in the embodiments of the present invention will be clearly and completely described below with reference to the drawings of the embodiments of the present invention. Obviously, the described embodiments are merely part of the embodiments of the present invention, but not all of them.

Referring to FIGs. 1-5, the present embodiment provides a technical solution in which a wind turbine generator includes a bottom plate 1, a wind housing 2, an outer cylinder 4 and an inner cylinder 6. The wind housing 2 is fixedly mounted on the bottom plate 1 through bolts; the outer cylinder 4 and the inner cylinder 6 are sequentially arranged inside the wind housing 2, and the inner cylinder 6 is located inside the outer cylinder 4; and an axis center line of the inner cylinder 6 and an axis center line of the outer cylinder 4 are located on the same straight line.

In one embodiment, the inner cylinder 6 is rotatably mounted on the bottom plate 1 through a third mute bearing 19, and the outer cylinder 4 is rotatably mounted on the wind housing 2 through a first mute bearing 3.

In one embodiment, an outer wind turbine 8 is fixedly mounted on the outer cylinder 4, and an inner wind turbine 9 is fixedly mounted on the inner cylinder 6. An axis center line of the outer wind turbine 8 and an axis center line of the inner wind turbine 9 are located on the same straight line; and the outer wind turbine 8 and the inner wind turbine 9 rotate synchronously. Wind energy is accelerated by a wind turbine generator device disclosed in Chinese patent application No. CN202120800876.X, and then is converted into wind with a vertical direction through an air duct. Subsequently, wind power acts on the outer wind turbine 8 and the inner wind turbine 9 simultaneously, the outer wind turbine 8 and the inner wind turbine 9 are integrated and are driven to be rotated in the same direction.

In one embodiment, an interlayered outer shell 11 and an interlayered inner shell 14 are sequentially arranged between the outer cylinder 4 and the inner cylinder 6; the interlayered outer shell 11 and the interlayered inner shell 14 are fixedly mounted on the bottom plate 1, and an interlayered coil 12 is arranged between the interlayered outer shell 11 and the interlayered inner shell 14; outer rotors 5 are uniformly and fixedly mounted on an inner wall of the outer cylinder 4, and outer stators 13 cooperated with the outer rotors 5 are uniformly and fixedly mounted on the interlayered outer shell 11; inner rotors 7 are uniformly and fixedly mounted on an outer wall of the inner cylinder 6, and inner stators 15 cooperated with the inner rotors 7 are uniformly and fixedly mounted on the interlayered inner shell 14; a suction fan 21 and a controller 22 are fixedly mounted below the bottom plate 1, and the controller 22 is electrically connected with the suction fan 21.

In one embodiment, during the process of the outer wind turbine 8 and the inner wind turbine 9 rotating in the same direction under the drive of the wind power, the outer wind turbine F8 drives the outer cylinder 4 to rotate in circular motion around the axis center line, the inner wind turbine 9 drives the inner cylinder 6 to rotate in circular motion around the axis center line. At the same time, the outer cylinder 4 drives the outer rotor 5 to move in circular motion around the outer stator 13, which is equivalent to the case where the outer stator 13 is rotating while the outer rotor 5 is static according to the principle of relative motion, and the outer stator 13 cuts magnetic lines perpendicular to a magnetic field of the outer rotor 5. The inner cylinder 6 drives the inner rotor 7 to rotate in circular motion around the inner stator 15, which is equivalent to the case where the inner stator 15 is rotating while the inner rotor 7 is static according to the principle of relative motion, and the inner stator 15 cuts magnetic lines perpendicular to a magnetic field of the inner rotor 7. According to the principle of electromagnetic induction, two sets of induced electromotive forces are respectively generated, and two sets of alternating current with the same frequency (the outer rotor 5 and the inner rotor 7 are integrated and hence have the same rotating speed; furthermore, the outer stator 13 and the inner stator 15 have the same number of poles) can be output after being connected, so as to be used as a power supply of the wind turbine generator according to the present invention.

The present invention can realize an electricity output with high power.

Firstly, the best way for traditional wind turbine generators to obtain wind energy is to obtain an aerodynamic lifting force perpendicular to the direction of wind. The flowing air is expressed as the sum of kinetic energy of air, i.e.,

$$P = \frac{1}{2}\rho AV^3$$

, where P is the total kinetic energy of air suction, $\rho$ is the air density, A is the sweeping area of blades, and V is the airflow speed. Thus, it can be seen that, a small-sized wind turbine generator has small blades and inherently obtains little wind energy.

According to the present invention, in the first place, a wind collecting device (the wind turbine generator device disclosed by Chinese patent application No. CN202120800876.X) capable of improving the wind energy is selected, and then blades of two turbines (the outer wind turbine 8 and the inner wind turbine 9) are adopted to obtain wind energy. The double-turbine blades have the capability of obtaining wind energy which is much higher than that of the traditional wind blades. The superposition of these two measures ensures the source and acquisition of high-energy wind energy, which is the basis for conversion of high-power electricity.

Secondly, after the generator is started, the self-excited alternating current generated in the interlayered coil 12 can control a suction turbine to accelerate the outer wind turbine 8 and the inner wind turbine 9 under the condition that the external wind power remains unchanged. The induced electromotive force is expressed as E=BLv, which shows that E is positively correlated with V, and is equivalent to increasing the conversion rate of wind energy and improving the output power again.

Thirdly, it can be seen from the formula of induced electromotive force E=BLv that, E is also positively correlated with the magnetic induction intensity and the length of stator coil. However, B is inversely proportional to the distance. If L is too long, the internal resistance will be increased, which results in it difficult to dissipate heat after heated. Therefore, by considering comprehensively, the present invention adopts a power generation system with dual-rotor, dual-stator and same-frequency, optimizes the relationships among the magnetic induction intensity, the distance and the wire length; and at the same time, there is no energy loss in direct driving as in variable-speed transmission, so that the wind energy can be converted into electric energy to the maximum extent, and an electricity output with high power can be ensured.

In one embodiment, the outer rotor 5 and the inner rotor 7 are composed of multipolar permanent magnets with the same number of poles, and the outer stator 13 and the inner stator 15 are formed by winding coils on soft magnet materials. The outer stator 13, the inner stator 15 and the interlayered coil 12 are all connected with the interlayered outer shell 11 and the interlayered inner shell 14, and meanwhile are fixed on the bottom plate 1 through the interlayered outer shell 11 and the interlayered inner shell 14. After the rotation motion of the outer rotor 5 and the inner rotor 7, the outer stator 13 and the inner stator 15 will generate induced electromotive force simultaneously according to the principle of electromagnetic induction. When being connected, electric current will be generated and power supply can be provided to the outside. Because the two sets of rotors have the same number of poles and the same rotating speeds, the alternating current as output by the two sets of systems may not necessarily have the same power but have the same frequency, thus can be processed subsequently by the same circuit.

In one embodiment, the two sets of alternating currents generate induced electromotive force with respect to the interlayered coil 12 between the outer stator 13 and the inner stator 15 (the winding directions of the inner stator 15, the outer stator 13 and the interlayered coil 12 maintain the "dotted terminals", so as to ensure that the mutual inductance is positive). After being connected, the alternating current is output to be used in the wind turbine generator and become "self-excited power".

According to the invention, the outer stator 13 and the inner stator 15 generate alternating current due to the electromagnetic induction principle and output the alternating current to the outside. Because the alternating-variable property of the alternating current will produce self-induction effect on the interlayered coil 12 wound on the soft magnet materials adjacent thereto, the interlayered coil 12 will generate induced electromotive force and output "self-excited power" type alternating current after being connected. Such alternating current is electrically connected with the controller 22 through a wire in a wire slot 23 so as to provide self-excited power electricity. The output lines of the two stators of the generator are connected to the outside through the wire slot and the controller box.

In one embodiment, the "self-excited power" is connected to the controller 22 which consists of a supercapacitor bank, a supercapacitor charging-discharging control circuit and a suction fan control circuit. After the "self-excited power" provides electricity for the controller 22, the controller 22 drives the suction fan 21 to work, and then the suction fan 21 sucks air to accelerate the wind to be discharged from the generator.

In one embodiment, when the external wind power acts on the external turbine 8 and the internal turbine 9, the speed of the wind passing therethrough will be dropped greatly because the turbine has a high efficiency of converting the energy of the wind turbine into mechanical energy (that is, it has a large resistance to the wind).

After the self-excited power according to the present invention is input into the controller 22, the controller 22 drives the suction fan 21 to work, then the suction fan 21 sucks in air, accelerates the wind to be discharged out of the generator, and causes the density of the wind at the outlets of the outer wind turbine 8 and the inner wind turbine 9 to be decreased due to the air suction. At this time, the density of the wind at the inlets of the two turbines remains unchanged, and the pressure of the wind at the inlets is increased as compared with that at the outlets, which accelerates the speed of the wind passing through the two turbines, thereby increasing the induced electromotive force and improving the power of the output electricity because the induced electromotive force E=BLV is positively related to the rotating speed.

According to the invention, the controller 22 consists of a supercapacitor bank, a supercapacitor charging-discharging control circuit, and a suction fan control circuit. The supercapacitor charging-discharging control circuit controls the charging and discharging of the supercapacitor bank. It charges the supercapacitor bank after the voltage of the "self-excited power" reaches a certain value, and discharges unidirectionally to the suction fan control circuit after the voltage of the "self-excited power" drops to a certain value so as to control the rotation of the suction fan 21.

Furthermore, when the wind power is sufficient, the supercapacitor bank is fully charged; in the case of intermittent wind, when the external wind suddenly decreases, the self-excited power drops to trigger the discharge of the supercapacitor bank. After being processed by the suction fan control circuit for a short time, the suction fan 21 is accelerated. Because the acceleration reduces the density of the outlet wind of the turbine and increases the pressure of the inlet wind of the turbine (at the same time, there will be wind inflow from the wind collecting system due to the convection principle), it can keep the two turbines rotating and discharging the supercapacitor bank for a period of time. If the intermittent wind lasts for a short time, the continuous output of electric energy can be ensured, and the intermittent wind can be adjusted to be continuous.

In one embodiment, the supercapacitor bank has the functions of energy storage and regulation.

In one embodiment, a support plate 16 is fixedly mounted at the top of the interlayered outer shell 11 and the interlayered inner shell 14, a second mute bearing 18 is embedded in the axis center of the support plate 16, and the inner cylinder 6 is rotatably connected with the support plate 16 through the second mute bearing 18. The inner cylinder 6 is supported by the support plate 16, which prevents the inner cylinder 6 from tilting and facilitates the rotation of the inner cylinder 6 on the bottom plate 1.

In one embodiment, first heat dissipation holes 17 are uniformly provided in the support plate 16; an exhaust hole 20 and a hollowed-out slot 24 are provided in the bottom plate 1 to penetrate through a surface of the bottom plate 1; and an opening is provided above a space between the outer rotor 5 and the outer stator 13 so that wind power can enter the space between the outer rotor 5 and the outer stator 13 through the opening above the space, thus playing a role of heat dissipation; and the wind power is discharged through the hollowed-out slot 24 and the exhaust hole 20 after passing through the space between the outer rotor 5 and the outer stator 13.

In one embodiment, the first heat dissipation hole 17 is arranged above a space between the inner rotor 7 and the inner stator 15; the wind power will enter the space between the inner rotor 7 and the inner stator 15 through the first heat dissipation hole 17, thus playing a role of heat dissipation; and the wind power is discharged through the hollowed-out slot 24 and the exhaust hole 20 after passing through the space between the inner rotor 7 and the inner stator 15.

In one embodiment, air jetting holes 10 are uniformly provided in one side of the outer cylinder 4 closer to the outer wind turbine 8; and after the wind power drives the outer wind turbine 8 to rotate, a part of the wind power will be blown out through the air jetting holes 10.

In one embodiment, the bottom plate 1 is provided with a wire slot 23 for wiring, and the wires to be connected by the controller 22 are arranged through the wire slot 23 in order to hide the wiring.

In one embodiment, twelve outer rotors 5 are provided. Each of the outer rotors includes a N pole and a S pole, and the N poles and S poles of the twelve outer rotors are alternately arranged. Twelve inner rotors 7 are provided. Each of the inner rotors includes a N pole and a S pole, and the N poles and S poles of the twelve inner rotors are alternately arranged.

In the present invention, the inner wind turbine 9 is fixed on the inner cylinder 6, the center of the inner wind turbine is empty and has a circular space; when the wind passes through the inner wind turbine 9, it makes the wind swirls downwards from the middle. When the wind passes through the outer wind turbine 8, it moves centrifugally and exits from the side and the bottom.

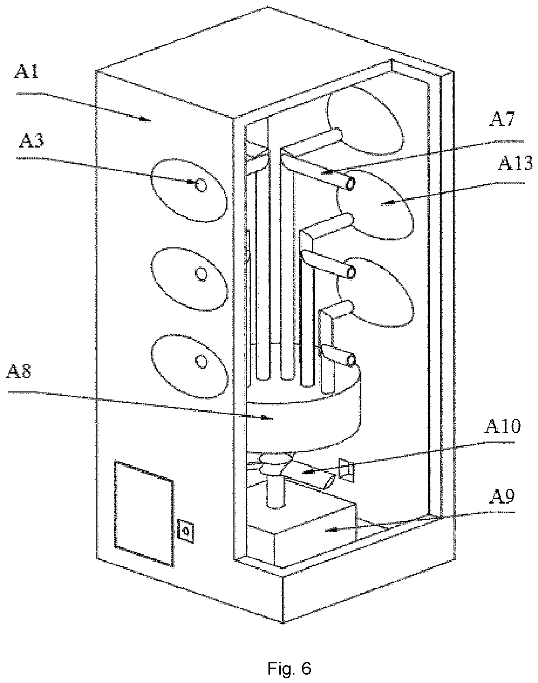

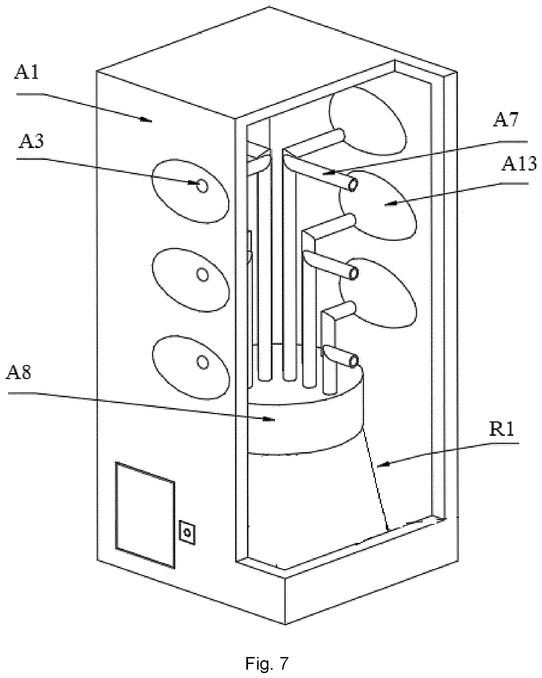

Referring to FIGs. 6 and 7, when in use, the wind turbine R1 of the invention can replace the generator set A9 and its blade A10 in the wind turbine generator disclosed in the Chinese patent application No. CN202120800876. X.

The working principle lies in that, the wind power is accelerated by the wind turbine generator device disclosed in the Chinese patent application No. CN202120800876.X, and then is converted into wind with vertical direction through an air duct; subsequently, the wind power acts on the blades of the outer wind turbine 8 and the inner wind turbine 9, and impacts the blades so as to rotate the flow channels and drive the outer cylinder 4 and the inner cylinder 6 to rotate around the axis center line; subsequently, a part of the wind power is discharged from the air jetting hole 10, a part of the wind power enters the space between the outer rotor 5 and the outer stator 13 through the opening above the space to play a role of heat dissipation, and a part of the wind power enters the space between the inner rotor 7 and the inner stator 15 through the first heat dissipation hole 17 to play a role of heat dissipation; and subsequently, the wind power is discharged through the hollowed-out slot 24 and the exhaust hole 20. Furthermore, when the outer cylinder 4 and the inner cylinder 6 rotate in circular motion around the axis center line, the outer cylinder 4 drives the outer rotor 5 to move in circular motion around the outer stator 13, which is equivalent to the case where the outer stator 13 is rotating while the outer rotor 5 is static according to the principle of relative motion, and the outer stator 13 cuts the magnetic lines perpendicular to the magnetic field of the outer rotor 5; the inner cylinder 6 drives the inner rotor 7 to move in circular motion around the inner stator 15, which is equivalent to the case where the inner stator 15 is rotating while the inner rotor 7 is static according to the principle of relative motion, and the inner stator 15 cuts the magnetic lines perpendicular to the magnetic field of the inner rotor 7. According to the principle of electromagnetic induction, two sets of induced electromotive forces are respectively generated, and two sets of alternating current with the same frequency (the outer rotor 5 and the inner rotor 7 are integrated and hence have the same rotating speed; furthermore, the outer stator 13 and the inner stator 15 have the same number of poles) can be output after being connected, so as to be used as the power supply of the wind turbine generator.

Based on the embodiments of the present invention, all other embodiments obtained by those ordinary skilled in the art without creative labors belong to the scope of protection of the present disclosure.

## Claims

1. A wind turbine generator comprising:

   a bottom plate (1), a wind housing (2), an outer cylinder (4) and an inner cylinder (6), wherein:

   the bottom plate (1) is provided with a wind housing (2) and the wind housing (2) is sequentially provided with an outer cylinder (4) and an inner cylinder (6);
   the inner cylinder (6) is rotatably mounted on the bottom plate (1), the outer cylinder (4) is rotatably mounted on the wind housing (2), the outer cylinder (4) is provided with an outer rotation wind turbine (8), and the inner cylinder (6) is provided with an inner rotation wind turbine (9);

an interlayered outer shell (11) and an interlayered inner shell (14) are sequentially placed between the outer cylinder (4) and the inner cylinder (6);

the interlayered outer shell (11) and the interlayered inner shell (14) are provided on the bottom plate (1), and an interlayered coil (12) is placed between the interlayered outer shell (11) and the interlayered inner shell (14);

the inner wall of the outer cylinder (4) is uniformly provided with an outer rotor (5), and the interlayered outer shell (11) is uniformly provided with an outer stator that matches the outer rotor (5), the outer wall of the inner cylinder (6) is uniformly provided with an inner rotor (7), the interlayered inner shell (14) is uniformly provided with an inner stator (15) that matches the inner rotor (7);

a suction fan (21) and a controller (22) are provided under the bottom plate (1), and the controller (22) is electrically connected to the suction fan (21); **characterized in that**, when the wind turbine generator works, the outer stator (13) and the inner stator (15) generate alternating current, the interlayered coil (12) will generate induced electromotive force and output "self-excited power" type alternating current after being connected, such alternating current is electrically connected with the controller (22) through a wire in a wire slot (23) so as to provide self-excited power electricity; and

the controller (22) consists of a supercapacitor bank, a supercapacitor charging-discharging control circuit, and a suction fan control circuit, the supercapacitor charging-discharging control circuit controls the charging and discharging of the supercapacitor bank, it charges the supercapacitor bank after the voltage of the "self-excited power" reaches a certain value, and discharges unidirectionally to the suction fan control circuit after the voltage of the "self-excited power" drops to a certain value so as to control the rotation of the suction fan (21).

2. The wind turbine generator according to claim 1, wherein:

a first mute bearing (3) is placed on the top of the inner side of the wind housing (2); and
the outer cylinder (4) is rotatably mounted inside the wind housing (2) through the first mute bearing (3).

3. The wind turbine generator according to claim 1, wherein:

the axis line of the outer rotation wind turbine (8) is located in the same straight line as the axis line of the inner rotation wind turbine (9); and
the outer rotation wind turbine (8) rotates synchronously with the inner rotation wind turbine (9).

4. The wind turbine generator according to claim 2, wherein:

a support plate (16) is placed on the top of the interlayered outer shell (11) and the interlayered inner shell (14);
the support plate (16) is inlaid with a second mute bearing (18) at the axis; and
the inner cylinder (6) is rotatable and connected with the support plate (16) through the second mute bearing (18).

5. The wind turbine generator according to claim 4, wherein the support plate (16) is uniformly provided with a first heat dissipation hole (17).

6. The wind turbine generator according to claim 1, wherein an air jetting hole (10) is uniformly provided on the side of the outer cylinder (4) adjacent to the outer rotation wind turbine (8).

7. The wind turbine generator according to claim 4, wherein:

the bottom plate (1) is inlaid with a third mute bearing (19) at the axis; and
the inner cylinder (6) is rotatably mounted on the bottom plate (1) through the third mute bearing (19).

8. The wind turbine generator according to claim 1, wherein an exhaust hole (20) and a hollowed-out slot (24) are provided to penetrate through a surface of the bottom plate (1).

9. The wind turbine generator according to claim 1, wherein the bottom plate (1) is provided with a wire slot (23) for wiring.

10. The wind turbine generator according to claim 1, wherein:

$6 \times n$ outer rotors (5) are provided, the n is a positive integer, and $n > -2$; and
$6 \times n$ inner rotors (7) are provided, the n is a positive integer, and $n > -2$.

**Patentansprüche**

1. Windturbinengenerator, umfassend:

   eine Bodenplatte (1), ein Windgehäuse (2), einen äußeren Zylinder (4) und einen inneren Zylinder (6),
   wobei:

   die Bodenplatte (1) mit einem Windgehäuse (2) versehen ist und das Windgehäuse (2) nacheinander mit einem äußeren Zylinder (4) und einem inneren Zylinder (6) versehen ist;
   der innere Zylinder (6) drehbar auf der Bodenplatte (1) montiert ist, der äußere Zylinder (4) drehbar auf dem Windgehäuse (2) montiert ist, der äußere Zylinder (4) mit einer außen rotierenden Windturbine (8) versehen ist und der innere Zylinder (6) mit einer innen rotierenden Windturbine (9) versehen ist;
   eine zwischengelagerte äußere Schale (11) und eine zwischengelagerte innere Schale (14) nacheinander zwischen dem äußeren Zylinder (4) und dem inneren Zylinder (6) platziert sind;
   die zwischengelagerte äußere Schale (11) und die zwischengelagerte innere Schale (14) auf der Bodenplatte (1) vorgesehen sind und eine zwischengelagerte Spule (12) zwischen der zwischengelagerten äußeren Schale (11) und der zwischengelagerten inneren Schale (14) platziert ist;
   die innere Wand des äußeren Zylinders (4) einheitlich mit einem äußeren Rotor (5) versehen ist und die zwischengelagerte äußere Schale (11) einheitlich mit einem äußeren Stator versehen ist, der mit dem äußeren Rotor (5) zusammenpasst, die äußere Wand des inneren Zylinders (6) einheitlich mit einem inneren Rotor (7) versehen ist, die zwischengelagerte innere Schale (14) einheitlich mit einem inneren Stator (15) versehen ist, der mit dem inneren Rotor (7) zusammenpasst;
   ein Sauggebläse (21) und eine Steuerung (22) unter der Bodenplatte (1) vorgesehen sind und die Steuerung (22) elektrisch mit dem Sauggebläse (21) verbunden ist; **dadurch gekennzeichnet, dass**
   wenn der Windturbinengenerator arbeitet, der äußere Stator (13) und der innere Stator (15) Wechselstrom erzeugen, die zwischengelagerte Spule (12) eine induzierte elektromotorische Kraft erzeugt und einen Wechselstrom vom Typ "selbsterregte Energie" ausgibt, nachdem sie verbunden ist, wobei ein derartiger Wechselstrom elektrisch mit der Steuerung (22) durch einen Draht in einem Drahtschlitz (23) verbunden ist, um selbsterregte Energie zu liefern; und
   die Steuerung (22) aus einer Superkondensatorbank, einem Superkondensator-Lade-Entlade-Steuerkreis und einem Sauggebläse-Steuerkreis besteht, der Superkondensator-Lade-Entlade-Steuerkreis das Laden und Entladen der Superkondensatorbank steuert, er die Superkondensatorbank auflädt, nachdem die Spannung der "selbsterregten Energie" einen bestimmten Wert erreicht, und unidirektional zu dem Sauggebläse-Steuerkreis entlädt, nachdem die Spannung der "selbsterregten Energie" auf einen bestimmten Wert abfällt, um die Drehung des Sauggebläses (21) zu steuern.

2. Windturbinengenerator nach Anspruch 1, wobei:

   ein erstes Dämpfungslager (3) oben auf der Innenseite des Windgehäuses (2) platziert ist; und
   der äußere Zylinder (4) über das erste Dämpfungslager (3) im Inneren des Windgehäuses (2) drehbar montiert ist.

3. Windturbinengenerator nach Anspruch 1, wobei:

   die Achsenlinie der außen rotierenden Windturbine (8) auf der gleichen geraden Linie liegt wie die Achsenlinie der innen rotierenden Windturbine (9); und
   die außen rotierende Windturbine (8) sich synchron mit der innen rotierenden Windturbine (9) dreht.

4. Windturbinengenerator nach Anspruch 2, wobei:

   eine Trägerplatte (16) oben auf der zwischengelagerten äußeren Schale (11) und der zwischengelagerten inneren Schale (14) platziert ist;
   die Trägerplatte (16) an der Achse mit einem zweiten Dämpfungslager (18) bestückt ist; und
   der innere Zylinder (6) drehbar ist und über das zweite Dämpfungslager (18) mit der Trägerplatte (16) verbunden ist.

5. Windturbinengenerator nach Anspruch 4, wobei die Trägerplatte (16) einheitlich mit einem ersten Wärmeableitungsloch (17) versehen ist.

6. Windturbinengenerator nach Anspruch 1, wobei auf der Seite des äußeren Zylinders (4), die der außen rotierenden Windturbine (8) benachbart ist, einheitlich ein Luftstrahlloch (10) vorgesehen ist.

**7.** Windturbinengenerator nach Anspruch 4, wobei:

die Bodenplatte (1) an der Achse mit einem dritten Dämpfungslager (19) bestückt ist; und der innere Zylinder (6) über das dritte Dämpfungslager (19) drehbar auf der Bodenplatte (1) montiert ist.

**8.** Windturbinengenerator nach Anspruch 1, wobei ein Auslassloch (20) und ein ausgehöhlter Schlitz (24) vorgesehen sind, um eine Fläche der Bodenplatte (1) zu durchdringen.

**9.** Windturbinengenerator nach Anspruch 1, wobei die Bodenplatte (1) mit einem Drahtschlitz (23) zur Verdrahtung versehen ist.

**10.** Windturbinengenerator nach Anspruch 1, wobei:

$6 \times n$ äußere Rotoren (5) vorgesehen sind, wobei n eine positive ganze Zahl ist und $n \geqq 2$; und $6 \times n$ innere Rotoren (7) vorgesehen sind, wobei n eine positive ganze Zahl ist und $n \geqq 2$.

**Revendications**

**1.** Générateur d'éolienne comprenant :

une plaque inférieure (1), un logement éolien (2), un cylindre extérieur (4) et un cylindre intérieur (6),
dans lequel :

la plaque inférieure (1) est dotée d'un logement éolien (2) et le logement éolien (2) est doté séquentiellement d'un cylindre extérieur (4) et d'un cylindre intérieur (6) ;
le cylindre intérieur (6) est monté de façon rotative sur la plaque inférieure (1), le cylindre extérieur (4) est monté de façon rotative sur le logement éolien (2), le cylindre extérieur (4) est doté d'une éolienne à rotation extérieure (8), et le cylindre intérieur (6) est doté d'une éolienne à rotation intérieure (9) ;
une coque extérieure interstratifiée (11) et une coque intérieure interstratifiée (14) sont placées séquentiellement entre le cylindre extérieur (4) et le cylindre intérieur (6) ;
la coque extérieure interstratifiée (11) et la coque intérieure interstratifiée (14) sont disposées sur la plaque inférieure (1), et une bobine interstratifiée (12) est placée entre la coque extérieure interstratifiée (11) et la coque intérieure interstratifiée (14) ;
la paroi intérieure du cylindre extérieur (4) est dotée uniformément d'un rotor extérieur (5), et la coque extérieure interstratifiée (11) est dotée uniformément d'un stator extérieur correspondant au rotor extérieur (5), la paroi extérieure du cylindre intérieur (6) est dotée uniformément d'un rotor intérieur (7), la coque intérieure interstratifiée (14) est dotée uniformément d'un stator intérieur (15) correspondant au rotor intérieur (7) ;
un ventilateur d'aspiration (21) et un contrôleur (22) sont disposés sous la plaque inférieure (1), et le contrôleur (22) est électriquement connecté au ventilateur d'aspiration (21) ; **caractérisé en ce que**
lorsque le générateur d'éolienne fonctionne, le stator extérieur (13) et le stator intérieur (15) génèrent un courant alternatif, la bobine interstratifiée (12) génère une force électromotrice induite et distribue un courant alternatif du type « énergie auto-excitée » après la connexion, un tel courant alternatif est connecté électriquement au contrôleur (22) par un fil dans une fente à fil (23) de manière à fournir de l'électricité auto-excitée ; et
le contrôleur (22) consiste en une batterie de supercondensateur, un circuit de commande de charge-décharge de supercondensateur, et un circuit de commande de ventilateur d'aspiration, le circuit de commande de charge-décharge de supercondensateur commande la charge et la décharge de la batterie de supercondensateur, charge la batterie de supercondensateur après que la tension de « l'énergie auto-excitée » a atteint une certaine valeur, et décharge unidirectionnellement le circuit de commande de ventilateur d'aspiration après que la tension de « l'énergie auto-excitée » a chuté à une certaine valeur, de manière à commander la rotation du ventilateur d'aspiration (21).

**2.** Générateur d'éolienne selon la revendication 1, dans lequel :

un premier palier silencieux (3) est placé sur le dessus du côté intérieur du logement éolien (2) ; et
le cylindre extérieur (4) est monté de façon rotative à l'intérieur du logement éolien (2) par le biais du premier palier silencieux (3).

**3.** Générateur d'éolienne selon la revendication 1, dans lequel :

la ligne axiale de l'éolienne à rotation extérieure (8) se trouve dans la même ligne droite que la ligne axiale de l'éolienne à rotation intérieure (9) ; et

l'éolienne à rotation extérieure (8) tourne de façon synchrone avec l'éolienne à rotation intérieure (9).

4. Générateur d'éolienne selon la revendication 2, dans lequel :

une plaque de support (16) est placée sur le dessus de la coque extérieure interstratifiée (11) et de la coque intérieure interstratifiée (14) ;
la plaque de support (16) est incrustée d'un deuxième palier silencieux (18) au niveau de l'axe ; et
le cylindre intérieur (6) est rotatif et relié à la plaque de support (16) par le biais du deuxième palier silencieux (18).

5. Générateur d'éolienne selon la revendication 4, dans lequel la plaque de support (16) est dotée uniformément d'un premier trou de dissipation de chaleur (17).

6. Générateur d'éolienne selon la revendication 1, dans lequel un trou d'éjection d'air (10) est disposé uniformément sur le côté du cylindre extérieur (4) adjacent à l'éolienne à rotation extérieure (8).

7. Générateur d'éolienne selon la revendication 4, dans lequel :

la plaque inférieure (1) est incrustée d'un troisième palier silencieux (19) au niveau de l'axe ; et
le cylindre intérieur (6) est monté de façon rotative sur la plaque inférieure (1) par le biais du troisième palier silencieux (19).

8. Générateur d'éolienne selon la revendication 1, dans lequel un trou d'échappement (20) et une fente évidée (24) sont disposés de manière à pénétrer à travers une surface de la plaque inférieure (1).

9. Générateur d'éolienne selon la revendication 1, dans lequel la plaque inférieure (1) est dotée d'une fente de câble (23) pour un câblage.

10. Générateur d'éolienne selon la revendication 1, dans lequel :

il est prévu $6 \times n$ rotors extérieurs (5), n étant un entier positif, et $n \geqq 2$ ; et
il est prévu $6 \times n$ rotors intérieurs (7), n étant un entier positif, et $n \geqq 2$.

Fig. 1

Fig. 2

Fig. 3

Fig. 4

Fig. 5

Fig. 6

Fig. 7

**REFERENCES CITED IN THE DESCRIPTION**

**Patent documents cited in the description**

- CN 202120800876X

- WO 2021118475 A1